Europäisches Patentamt

European Patent Office

Office européen des brevets

(19)

(11) Veröffentlichungsnummer: **0 560 792 B1**

(12) # EUROPÄISCHE PATENTSCHRIFT

(45) Veröffentlichungstag der Patentschrift: **25.01.95**

(21) Anmeldenummer: **91919415.9**

(22) Anmeldetag: **06.11.91**

(86) Internationale Anmeldenummer:
**PCT/EP91/02099**

(87) Internationale Veröffentlichungsnummer:
**WO 92/10551 (25.06.92 92/14)**

(51) Int. Cl.6: **C09D 167/00,** C09D 163/00,
C09D 5/03, //(C09D167/00,
163:00),(C09D163/00,167:00)

(54) **PULVERLACK UND DESSEN VERWENDUNG ZUR INNENBESCHICHTUNG VON VERPACKUNGSBEHÄLTERN UND ZUR SCHWEISSNAHTABDECKUNG.**

(30) Priorität: **05.12.90 DE 4038681**

(43) Veröffentlichungstag der Anmeldung:
**22.09.93 Patentblatt 93/38**

(45) Bekanntmachung des Hinweises auf die
Patenterteilung:
**25.01.95 Patentblatt 95/04**

(84) Benannte Vertragsstaaten:
**AT BE CH DE DK ES FR GB IT LI NL SE**

(56) Entgegenhaltungen:
**EP-A- 0 136 263**
**EP-A- 0 194 904**
**DE-A- 4 012 020**
**FR-A- 2 351 159**
**US-A- 4 183 974**

**Patent Abstracts of Japan, vol. 10, no. 350, 26.11.1986; & JP-A-61 151 274**

(73) Patentinhaber: **BASF Lacke + Farben AG**
**Glasuritstrasse 1**
**D-48165 Münster-Hiltrup (DE)**

(72) Erfinder: **JANDEL, Lothar**
**Linckensstrasse 33**
**D-4400 Münster (DE)**
Erfinder: **KRAUSE, Siegfried**
**Auf der Woort 19**
**D-4400 Münster (DE)**
Erfinder: **RADEMACHER, Josef**
**Linckensstrasse 117**
**D-4400 Münster (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

Journal of Hazardous Materials, vol. 19, no. 1, 1988, Elsevier Schience Publ., B.V., Amsterdam, NL; R.K.ECKHOFF et al.: "Ignitability and explosibility of polyester/Epoxy resins for electrostatic powder coating", pages 1-6, see page 5, table 1, page 7, table 5

S.Paul: "Surface Coatings Science and Techn.", ed. by John Wiley & Sons, 1985, see pages 686-688

Farbe + Lack, vol. 90, no. 6, 1984; R. Polke: "Partikelgrössenverteilungen von Pulverlakken", pages 457-463, see pages 461-463

## Beschreibung

Gegenstand der vorliegenden Erfindung sind Pulverlacke für die Innenbeschichtung und Schweißnahtabdeckung von Verpackungsbehältern auf der Basis von Epoxidharzen und carboxylgruppenhaltigen Polyestern. Die vorliegende Erfindung betrifft außerdem Verfahren zur Innenbeschichtung und zur Schweißnahtabdeckung von Verpackungsbehältern sowie die Verwendung der Pulverlacke.

Verpackungsbehälter, wie beispielsweise Konservendosen, zwei- und dreiteilige Getränkedosen u.ä., werden innen mit einer Beschichtung versehen, um einerseits das Füllgut vor einer Beeinträchtigung durch herausgelöste Bestandteile des Metallblechs zu schützen, andererseits um eine Korrosion des Metallblechs durch aggressive Füllgüter zu vermeiden.

In der Praxis erfolgt diese Beschichtung der Verpackungsbehälter hauptsächlich mittels organisch gelöster Lacke. Dies hat jedoch eine hohe Lösemittelbelastung der Umgebung beim Trocknen der Lackfilme zur Folge. Es wird daher verstärkt versucht, diese Lacke durch lösungsmittelarme bzw. lösemittelfreie zu ersetzen. So werden beispielsweise zur Abdeckung von Dosenschweißnähten vielfach schon thermoplastische Pulverlacke eingesetzt. Diese Produkte werden durch teure Kaltvermahlung aus den entsprechenden Thermoplasten hergestellt.

Weiterhin sind aus der EP-B 119 164 duroplastische Pulverlacke für die Schweißnahtdeckung von Metallbehältern, die zur Aufnahme von Lebensmitteln oder Getränken eingesetzt werden, bekannt. Diese duroplastischen Pulverlacke enthalten als Bindemittel ein Gemisch aus einem aromatischen Epoxidharz mit im Mittel maximal 2 Epoxidgruppen pro Molekül und aus einem aromatischen Epoxidharz mit im Mittel mehr als 2 Epoxidgruppen pro Molekül. Als Härter wird das Kondensationsprodukt des Bisphenol-A-Diglycidylethers mit Bisphenol A und/oder ein saurer Polyester auf der Basis Trimellithsäureanydrid/aliphatisches Polyol eingesetzt. In der EP-B-119 164 sind jedoch keine Angaben über geeignete Teilchengrößen und Korngrößenverteilungen der Pulverlacke enthalten. Nachteilig ist außerdem, daß diese Pulverlacke nur zur Schweißnahtabdeckung geeignet sind.

Aus der EP-B-10 805 sind Pulverlacke für die Innenbeschichtung von Dosen bekannt, die einen Polyester mit endständigen Carboxylgruppen und einer OH-Zahl kleiner 10 mg KOH/g sowie ein Epoxidharz enthalten. Als Härtungskatalysator enthalten diese Pulverlacke Cholinderivate. Die Pulverlacke weisen eine mittlere Teilchengröße zwischen 20 und 150 $\mu$m auf. In der EP-B-10 805 sind jedoch keine Hinweise enthalten, wie Doseninnenbeschichtungen erhalten werden können, die auch bei Schichtdicken $\leq$ 15 $\mu$m geschlossene Filme liefern. Außerdem weisen diese Pulverlacke - bedingt durch die niedrige OH-Zahl des Polyesters - den Nachteil einer nur schlechten Vernetzung auf. Entsprechend weist dieses System für die Praxis nicht akzeptable Trocknungszeiten von 10 bis 40 min bei 150 bis 220 °C auf, während die Trocknungszeit moderner Fabrikationsanlagen bei maximal 20 bis 30 s bei einer Objekttemperatur von 260 bis 280 °C liegt.

Aus der US-PS-4,497,837 sind Pulverlacke für die Innenbeschichtung von Dosen und Dosendeckeln bekannt, die ein Epoxidharz und aromatische Amine, Lewis-Säuren oder Säureanhydride als Härter enthalten. Die Pulverlacke weisen eine mittlere Teilchengröße zwischen 20 und 150 $\mu$m, bevorzugt 30 bis 70 $\mu$m auf. Nachteilig bei diesen Systemen ist die hohe Mindestschichtdicke von 38 $\mu$m zur Erzielung von Beschichtungen mit einer nicht zu großen Porigkeit. Außerdem weisen diese Pulverlacke den Nachteil auf, daß zur Aushärtung der beschriebenen Systeme Ofenverweilzeiten zwischen 5 und 12 min erforderlich sind.

Weiterhin sind aus der US-PS 3,962,486 Pulverlacke für die Innenbeschichtung von Dosen bekannt, die ebenfalls ein Epoxidharz und aromatische Amine, Epoxi-Amin-Addukte oder Säureanhydride enthalten. Durch Anwendung des Plasma-Sprühbeschichtungsverfahrens sind Beschichtungen herstellbar, die bereits bei geringen Schichtdicken von weniger als 13 $\mu$m die Anforderungen erfüllen, die üblicherweise an Innenbeschichtungen von Lebensmittelverpackungen gestellt werden. Damit die Applizierbarkeit mittels des Plasma-Sprühverfahrens gewährleistet ist, dürfen nur Pulverlacke eingesetzt werden, die eine maximale Teilchengröße $\leq$ 100 $\mu$m sowie eine ausreichend niedrige Schmelzviskosität aufweisen.

Die Verwendung aminischer Härter führt jedoch zu einer unzureichenden Sterilisationsbeständigkeit der resultierenden Beschichtungen. Nachteilig ist ferner, daß mit Aminen gehärtete Epoxidharze zur Versprödung neigen und sehr schlechte Elastizitäten haben. Säureanhydrid-Härter weisen den Nachteil auf, daß sie stark reizend sind und daher bei der Formulierung der Pulverlacke besondere Vorsichtsmaßnahmen erforderlich sind.

Schließlich sind aus der US-PS 4,183,974 Pulverlacke für die Innenbeschichtung von Dosen bekannt, die ein Epoxidharz und einen Aminhärter enthalten. Diese Pulverlacke weisen mittlere Teilchengrößen zwischen 1 und 100 $\mu$m, bevorzugt zwischen 1 und 10 $\mu$m auf. Die resultierenden Beschichtungen weisen zwar bereits bei Schichtdicken von $\leq$ 13 $\mu$m die geforderte geringe Porosität auf, jedoch ist die Sterilisationsbeständigkeit der resultierenden Beschichtungen verbesserungsbedürftig. Nachteilig ist ferner, daß mit Aminen gehärtete Epoxidharze zur Versprödung neigen und sehr schlechte Elastizitäten haben.

Der vorliegenden Erfindung liegt die Aufgabe zugrunde, Pulverlacke zur Verfügung zu stellen, die bei gleicher chemischer Zusammensetzung sowohl für die Schweißnahtabdeckung als auch für die Innenbeschichtung von Verpackungsbehältern, insbesondere Metallbehältern, geeignet sind. Außerdem sollten diese Pulverlacke bei der Verwendung für die Innenbeschichtung von Verpackungsbehältern auch bei Applikation mit geringen Schichtdicken von ≦ 15 $\mu$m die Anforderungen erfüllen, die üblicherweise an Doseninnenbeschichtungen gestellt werden. Insbesondere sollten diese Innenbeschichtungen dabei nicht porös sein (bestimmt mit Hilfe des sog. Enamelratertests), eine gute Haftung auf dem Untergrund zeigen, eine hohe Elastizität aufweisen und unter den üblichen Pasteurisations- und Sterilisationsbedingungen beständig sein. Weiterhin sollten diese Pulverlacke bei der Verwendung für die Schweißnahtabdeckung zu Beschichtungen mit hoher Elastizität führen, die die mechanischen Verformungen beim Börteln und Sikken der Dosen ohne Beschädigung überstehen. Nach der Verformung ist ebenfalls eine Sterilisations- und Pasteurisationsbeständigkeit erforderlich.

Dabei sollten die Pulverlacke während der für die Dosenbeschichtung üblichen kurzen Trocknungszeiten aushärtbar sein.

Diese Aufgabe wird überraschenderweise durch einen Pulverlack der eingangs genannten Art gelöst, der dadurch gekennzeichnet ist, daß

1.) der Pulverlack

A) mindestens einen Polyester mit einer Säurezahl von 25 bis 120 mg KOH/g und einer OH-Zahl ≧ 10 mg KOH/g und

B) mindestens ein Epoxidharz mit einem Epoxidäquivalentgewicht von 400 bis 3000

enthält und

2.) der Pulverlack eine derartige Korngrößenverteilung aufweist, daß

a) mindestens 90 Massenprozent der Pulverlackteilchen eine Teichengröße zwischen 1 und 60 $\mu$m aufweisen,

b) die maximale Teilchengröße für mindestens 99 Massenprozent der Pulverlackteilchen ≦ 100 $\mu$m beträgt,

c) die mittlere Teilchengröße der Pulverlackteilchen zwischen 5 und 20 $\mu$m liegt und

d) die Steilheit der Kornverteilungskurve am Wendepunkt größer gleich 100 ist.

Gegenstand der Erfindung ist außerdem ein Pulverlack für die Schweißnahtabdeckung von Verpakkungsbehältern auf der Basis von Epoxidharzen und carboxylgruppenhaltigen Polyestern, dadurch gekennzeichnet, daß

1.) der Pulverlack

A) mindestens einen Polyester mit einer Säurezahl von 25 bis 120 mg KOH/g und einer OH-Zahl > 10 mg KOH/g und

B) mindestens ein Epoxidharz mit einem Epoxidäquivalentgewicht von 400 bis 3000

enthält und

2.) der Pulverlack eine derartige Korngrößenverteilung aufweist, daß

a) mindestens 90 Massenprozent der Pulverlackteilchen eine Teichengröße zwischen 1 und 100 $\mu$m aufweisen,

b) die maximale Teilchengröße für mindestens 99 Massenprozent der Pulverlackteilchen ≦ 150 $\mu$m beträgt,

c) die mittlere Teilchengröße der Pulverlackteilchen zwischen > 20 und 60 $\mu$m liegt und

d) die Steilheit der Kornverteilungskurve am Wendepunkt ≧ 50 ist.

Außerdem betrifft die Erfindung Verfahren zur Innenbeschichtung und zur Schweißnahtabdeckung von Verpackungsbehältern, bei denen diese Pulverlacke appliziert werden.

Gegenstand der Erfindung ist schließlich auch die Verwendung der Pulverlacke zur Innenbeschichtung und Schweißnahtabdeckung von Verpackungsbehältern.

Es ist überraschend und war nicht vorhersehbar, daß die erfindungsgemäßen Pulverlacke bei gleicher chemischer Zusammensetzung sowohl für die Schweißnahtabdeckung als auch für die Innenbeschichtung von Verpackungsbehältern geeignet sind und daß das Eigenschaftsprofil und damit der Anwendungszweck einfach durch Einstellung einer entsprechenden Korngrößenverteilung gesteuert werden kann. Dabei sind diese Pulverlacke schnell aushärtbar, einfach zu handhaben und einfach zu applizieren.

Außerdem zeichnen sich die erfindungsgemäßen Pulverlacke bei Verwendung zur Innenbeschichtung von Verpackungsbehältern dadurch aus, daß Beschichtungen mit nur einer sehr geringen Schichtdicke von ≦ 15 $\mu$m die von den Dosenherstellern geforderten Eigenschaften aufweisen. Insbesondere weisen diese Beschichtungen selbst bei einer geringen Schichtdicke von ≦ 15 $\mu$m die geforderte geringe Porosität auf. Außerdem zeichnen sich diese Beschichtungen durch eine gute Haftung, hohe Flexibilität und eine gute Pasteurisations- und Sterilisationsbeständigkeit aus.

Weiterhin weisen die erfindungsgemäßen Pulverlacke bei der Verwendung zur Schweißnahtabdeckung den Vorteil auf, daß die Beschichtungen eine hohe Flexibilität aufweisen, so daß die Schweißnahtabdeckung Verformungen des Verpackungsbehälters bei der Weiterverarbeitung ohne Ablösung oder Rißbildung folgen kann. Vorteilhaft ist ferner, daß im Gegensatz zu aminischen Härtern gute Sterilisationsbeständigkeiten mit dem erfindungsgemäßen Pulverlack erzielt werden.

Im folgenden sollen nun zunächst die einzelnen Komponenten der erfindungsgemäßen Pulverlacke näher erläutert werden.

Die in den erfindungsgemäßen Pulverlacken eingesetzten Polyester (Komponente A) weisen eine Säurezahl von 25 bis 120 mg KOH/g, bevorzugt 30 bis 90 mg KOH/g und besonders bevorzugt 60 bis 90 mg KOH/g sowie eine OH-Zahl von mindestens 10 mg KOH/g, bevorzugt von mindestens 15 mg KOH/g und bevorzugt kleiner gleich 30 mg KOH/g auf. Bevorzugt werden Polyester mit einer Funktionalität $\geq$ 2 eingesetzt. Die zahlenmittleren Molekulargewichte der Polyester liegen im allgemeinen zwischen 1000 und 10000, bevorzugt zwischen 1500 und 5000. Bevorzugt werden FDA-zugelassene (FDA = Food and Drug Administration) Polyester eingesetzt.

Die carboxylgruppen- und hydroxylgruppenhaltigen Polyester sind dabei nach den üblichen Methoden (vgl. z.B. Houben Weyl, Methoden der organischen Chemie, 4. Auflage, Band 14/2, Georg Thieme Verlag, Stuttgart 1961) herstellbar.

Als Carbonsäurekomponente zur Herstellung der Polyester sind aliphatische, cycloaliphatische und aromatische Di- und Polycarbonsäuren geeignet, wie z.B. Phthalsäure, Terephthalsäure, Isophthalsäure, Trimellithsäure, Pyromellithsäure, Adipinsäure, Bernsteinsäure, Glutarsäure, Pimelinsäure, Suberinsäure, Acelainsäure, Sebacinsäure u.ä. Die Säuren können dabei auch in Form ihrer veresterungsfähigen Derivate (z.B. Anhydride) oder ihrer umesterungsfähigen Derivate (z.B. Dimethylester) eingesetzt werden.

Als Alkoholkomponente zur Herstellung der Polyester sind die üblicherweise eingesetzten Di- und/oder Polyole geeignet, z.B. Ethylenglykol, Propandiol-1,2 und -1,3, Butandiole, Diethylenglykol, Triethylenglykol, Tetraethylenglykol, Hexandiol-1,6, Neopentylglykol, 1,4-Dimethylolcyclohexan, Glycerin, Trimethylolethan, Trimethylolpropan, Pentaerythrit, Ditrimethylolpropan, Diglycerin u.ä.

Die so erhaltenen Polyester können dabei einzeln oder als Mischung verschiedener Polyester eingesetzt werden.

Als Komponente B geeignet sind alle festen Epoxidharze mit Epoxidäquivalentgewichten zwischen 400 und 3000, bevorzugt zwischen 600 und 900 und besonders bevorzugt zwischen 700 und 800. Bevorzugt werden Epoxidharze auf Basis Bisphenol-A und/oder epoxidierte Novolakharze eingesetzt. Die Epoxidharze auf Basis Bisphenol A weisen dabei im allgemeinen eine Funktionalität $\leq$ 2, die epoxidierten Novolakharze eine Funktionalität $\geq$ 2 auf.

Geeignete Epoxidharze sind beispielsweise die unter folgenden Namen im Handel erhältlichen Produkte: Epikote® 154, 1001, 1002, 1055, 1004, 1007, 1009, 3003-4F-10 der Firma Shell-Chemie, XZ 86 795 und DER 664, 667, 669, 662, 642U, und 672U der Firma Dow sowie Araldit® XB 4393, XB 4412, GT 7072, GT 7203, GT 7004, GT 7304, GT 7097 und GT 7220 der Firma Ciba Geigy.

Bevorzugt werden dabei FDA-zugelassene Epoxidharze eingesetzt.

Die Polyesterkomponente A wird üblicherweise in einer Menge von 19 bis 80 Gew.-%, bevorzugt von 39 bis 60 Gew.-%, bezogen auf das Gesamtgewicht des Pulverlacks, eingesetzt.

Die Epoxidharzkomponente B wird in den erfindungsgemäßen Pulverlacken üblicherweise in einer Menge von 19 bis 80 Gew.-%, bevorzugt von 39 bis 60 Gew.-%, bezogen auf das Gesamtgewicht des Pulverlacks, eingesetzt.

Als weitere Komponente C enthalten die erfindungsgemäßen Pulverlacke mindestens einen Härtungskatalysator, üblicherweise in einer Menge von 0,01 bis 5,0 Gew.-%, bevorzugt von 0,05 bis 2,0 Gew.-%, jeweils bezogen auf das Gesamtgewicht des Pulverlacks.

Vorteilhafterweise ist der Katalysator Imidazol, 2-Methylimidazol, Ethyltriphenylphosphoniumchlorid oder ein anderes Salz desselben, ein Chinolinderivat, wie beispielsweise in der EP-B-10805 beschrieben, ein primäres, sekundäres oder tertiäres Aminophenol, Aluminiumacetylacetonat oder ein Toluolsulfonsäuresalz oder eine Mischung aus verschiedenen der genannten Katalysatoren.

Üblicherweise enthalten die im Handel erhältlichen carboxylgruppen- und hydroxylgruppenhaltigen Polyesterharze bereits den erforderlichen Härtungskatalysator.

Beispiele für derartige handelsübliche carboxyl- und hydroxylgruppenhaltige Polyester, die besonders bevorzugt eingesetzt werden, sind die unter den folgenden Markennamen im Handel erhältlichen Produkte: Crylcoat® 314, 340, 344, 2680, 316, 2625, 320, 342 und 2532 der Firma UCB, Drogenbos, Belgien, Grilesta® 7205, 7215, 72-06, 72-08, 72-13, 72-14, 73-72, 73-93 und 7401 der Firma Ems-Chemie sowie Neocrest P 670, P 671, P 672, P 678 und P 662 der Firma ICI.

EP 0 560 792 B1

Weiterhin können die erfindungsgemäßen Pulverlacke noch 0 bis 40 Gew.-%, bevorzugt 15 bis 25 Gew.-%, Füllstoffe enthalten (Komponente D). Bevorzugt werden FDA-zugelassene Füllstoffe eingesetzt.

Im allgemeinen werden anorganische Füllstoffe, beispielsweise Titandioxid, wie z.B. Kronos 2160 der Firma Kronos Titan, Rutil R 902 der Firma Du Pont und RC 566 der Firma Sachtleben, Bariumsulfat und Füllstoffe auf Silikat-Basis, wie z.B. Talkum, Kaolin, Magnesiumaluminiumsilikate, Glimmer u.ä. eingesetzt. Bevorzugt werden Titandioxid und Füllstoffe vom Quarzsand-Typ eingesetzt.

Außerdem können die erfindungsgemäßen Pulverlacke ggf. noch 0,01 bis 10 Gew.-%, bevorzugt 0,1 bis 2 Gew.-%, bezogen auf das Gesamtgewicht des Pulverlacks, weitere Hilfs- und Zusatzstoffe enthalten. Beispiele hierfür sind Verlaufsmittel, Rieselhilfen, Entlüftungsmittel, wie z.B. Benzoin, Pigmente u.ä. Die Herstellung der Pulverlacke erfolgt nach den bekannten Methoden (vgl. z.B. Produktinformation der Firma BASF Lacke + Farben AG, "Pulverlacke", 1990) durch Homogenisieren und Dispergieren, beispielsweise mittels eines Extruders, Schneckenkneters, u.ä. Es ist erfindungswesentlich, daß die Pulverlacke nach ihrer Herstellung auf eine dem Anwendungszweck angepaßte Korngrößenverteilung durch Vermahlen und ggf. durch Sichten und Sieben eingestellt werden.

Für die Verwendung zur Innenbeschichtung der Verpackungsbehälter wird die Korngrößenverteilung (a) so eingestellt, daß mindestens 90 Massenprozent der Pulverlackteilchen eine Teilchengröße zwischen 1 und 60 $\mu$m aufweisen, d.h. d 90 = 1 bis 60 $\mu$m. Vorzugsweise weisen 90 Massenprozent der Pulverlackteilchen eine Teilchengröße zwischen 1 und 40 $\mu$m (d 90 = 1 bis 40 $\mu$m) und besonders bevorzugt zwischen 5 und 25 $\mu$m (d 90 = 5 bis 25 $\mu$m) auf. Die maximale Teilchengröße der Pulverlackteilchen beträgt für mindestens 99 Massenprozent der Teilchen ≤ 100 $\mu$m, bevorzugt ≤ 60 $\mu$m und besonders bevorzugt < 40 $\mu$m). Die mittlere Teilchengröße der Pulverlackteilchen liegt zwischen 5 und 20 $\mu$m, besonders bevorzugt zwischen 5 und 12 $\mu$m. Weiterhin ist es erfindungswesentlich, daß bei Verwendung der Pulverlacke zur Innenbeschichtung der Verpackungsbehälter die Korngrößenverteilung so eingestellt wird, daß die Steilheit S der Kornverteilungskurve im Wendepunkt ≥ 100, bevorzugt ≥ 150 und besonders bevorzugt ≥ 200 ist. Zur Erzielung von Beschichtungen mit besonders guten Eigenschaften werden ganz besonders bevorzugt Pulverlacke eingesetzt, bei denen die Steilheit S der Kornverteilungskurve im Wendepunkt ≥ 300 ist. Allerdings steigen die Fertigungskosten der Pulverlacke mit zunehmender Steilheit stark an. Die Steilheit S ist dabei definiert als Grenzwert für $f(x_2)$ - $f(x_1)$ gegen Null von $(f(x_2)$ - $f(x_1))/1g$ $((x_2/x_1))$ am Wendepunkt der Kornverteilungskurve. Die Kornverteilungskurve stellt dabei die Auftragung der kumulierten Massenprozente gegen den absoluten Korndurchmesser (logarithmisch dargestellt) dar.

Für die Verwendung als Innenbeschichtung von Verpackungsbehältern sind somit insbesondere Pulverlacke geeignet, die sowohl nur einen geringen Anteil an sehr feinen Partikeln (Teilchengröße < 5 $\mu$m) sowie gleichzeitig auch nur einen sehr geringen Anteil an grobteiligen Pulverlackpartikeln (Teilchengröße > 25 $\mu$m) aufweisen, d.h. eine möglichst enge Korngrößenverteilung aufweisen.

Für die Verwendung als Schweißnahtabdeckung wird die Korngrößenverteilung (b) so eingestellt, daß mindestens 90 Massenprozent der Pulverlackteilchen eine Teichengröße zwischen 1 und 100 $\mu$m aufweisen. Bevorzugt werden Pulverlacke eingesetzt, bei denen mindestens 90 Massenprozent der Pulverlackteilchen eine Teilchengröße zwischen 5 und 100 $\mu$m aufweisen. Die oben definierte Steilheit S der Kornverteilungskurve am Wendepunkt kann in diesem Fall auch unter 100 liegen. Die Steilheit ist üblicherweise ≥ 50, bevorzugt > 100. Die maximale Teilchengröße der Pulverlackteilchen beträgt für mindestens 99 Massenprozent der Teilchen ≤ 150 $\mu$m, bevorzugt ≤ 100 $\mu$m. Die mittlere Teilchengröße der Pulverlackteilchen liegt bevorzugt zwischen > 20 und 60 $\mu$m, besonders bevorzugt zwischen 25 und 40 $\mu$m.

Für die Verwendung zur Schweißnahtabdeckung sind daher prinzipiell auch die für die Innenbeschichtung der Verpackungsbehälter eingesetzten Pulverlacke geeignet. Bevorzugt werden für die Verwendung zur Schweißnahtabdeckung aber Pulverlacke eingesetzt, die einen höheren Anteil grobteiliger Pulverlackpartikel enthalten.

Die Einstellung der jeweiligen Korngrößenverteilung der Pulverlacke erfolgt mit geeigneten Mahlaggregaten, ggf. in Kombination mit geeigneten Sicht- und Siebvorrichtungen, z.B. mit Fließbettgegenstrahlmühlen (AFG) der Firma Alpine, Augsburg, in Kombination mit Turboplex-Feinstsichtern der Firma Alpine, Augsburg.

Die Verpackungsbehälter, die mit den erfindungsgemäßen Pulverlacken beschichtet werden, können aus den unterschiedlichsten Materialien bestehen, unterschiedlichste Größen und Formen aufweisen sowie nach verschiedenen Verfahren hergestellt worden sein. Insbesondere werden aber mit den erfindungsgemäßen Pulverlacken metallische Behälter beschichtet.

Diese Metallbehälter können dadurch hergestellt worden sein, daß zunächst Metallblech gerollt und dann durch Umkanten verbunden wurde. An dem so entstandenen Zylinder können dann die Endstücke befestigt werden. Die erfindungsgemäßen Pulverlacke werden sowohl für die Abdeckung der Schweißnaht als auch für die Innenbeschichtung der Dosenrümpfe, die im allgemeinen bereits einen Boden haben, eingesetzt.

6

Ferner können auch tiefgezogene Metallbehälter innen mit den erfindungsgemäßen Pulverlacken beschichtet werden. Selbstverständlich sind die Pulverlacke aber auch für die Beschichtung von Dosendeckeln und Dosenböden geeignet. Die Verpackungsbehälter können aus den unterschiedlichsten Materialien bestehen, wie beispielsweise Aluminium, Schwarzblech, Weißblech und verschiedene Eisenlegierungen, die ggf. mit einer Passivierungsschicht auf Basis von Nickel-, Chrom- und Zinnverbindungen versehen sind.

Behälter dieser Art werden üblicherweise als Behälter für Nahrungsmittel und Getränke verwendet, etwa für Bier, Säfte, Limonaden, Suppen, Gemüse, Fleischgerichte, Fischgerichte, Gemüse, aber auch z.B. für Tierfutter.

Die Applikation erfolgt nach bekannten Methoden, wie sie beispielsweise in der US-PS 4,183,974 beschrieben sind. Die elektrostatische Aufladung der Pulverlackteilchen erfolgt dabei durch Reibung (Triboelektrizität). Die Applikation der Pulverlackteilchen erfolgt mit Hilfe von speziellen, dem Fachmann bekannten Sprühköpfen.

Für die Innenbeschichtung der Verpackungsbehälter werden die Pulverlacke üblicherweise in einer Schichtdicke $\leq 15$ $\mu$m, bevorzugt von 10 bis 14 $\mu$m aufgebracht. Selbst bei diesen geringen Schichtdicken erfüllen die Beschichtungen die üblicherweise an derartige Filme gestellten Anforderungen. Selbstverständlich können die Pulverlacke aber auch in höheren Schichtdicken aufgebracht werden. Für die Abdeckung von Schweißnähten werden die Pulverlacke üblicherweise in einer Schichtdicke von $\leq 200$ $\mu$m, bevorzugt $\leq$ 80 $\mu$m aufgebracht.

Der Verpackungsbehälter, dessen Schweißnaht oder Innenseite mit dem erfindungsgemäßen Pulverlack versehen worden ist, wird anschließend zur Härtung des Pulverlackes einer Hitzebehandlung unterworfen. Diese Hitzebehandlung kann auf verschiedene Weise erfolgen. In der Praxis werden die Behälter hierzu häufig durch einen Durchlaufofen befördert. Die Pulverlacke härten dabei im allgemeinen bei Objekttemperaturen zwischen 230 und 350°C innerhalb einer Zeit von 5 bis 30 s vollständig aus. Dabei kann der Durchlaufofen bei konstanter Temperatur betrieben werden oder ein Temperaturprofil aufweisen, das nach den jeweiligen Gegebenheiten eingestellt wird.

Im folgenden wird nun die Erfindung anhand von Ausführungsbeispielen näher erläutert. Alle Angaben über Teile und Prozente sind dabei Gewichtsangaben, falls nicht ausdrücklich etwas anderes festgestellt wird. Die Herstellung der Pulverlacke erfolgte jeweils, indem alle Bestandteile in Kannen eingewogen, in einem Vormischer vorgemischt, mittels eines Extruders bei 60 bis 80°C homogenisiert, schnellstmöglich abgekühlt und mit Mahlaggregaten auf die gewünschte Korngrößenverteilung eingestellt wurden.

Beispiel 1

Folgende Komponenten wurden zu dem Pulverlack 1 verarbeitet:

500 Teile   Vernetzungskatalysator enthaltender, handelsüblicher Polyester mit einer Säurezahl von 35 mg KOH/g und einer OH-Zahl von 15 mg KOH/g (Handelsprodukt Grilesta P 7401 der Firma Ems-Chemie),

248 Teile   handelsübliches epoxidiertes Novolakharz mit einem Epoxidäquivalentgewicht (EEW) von 700 (Handelsprodukt DER 672 U der Firma Dow),

50 Teile   handelsübliches Epoxidharz auf Basis Bisphenol-A mit einem EEW von 800 (Handelsprodukt Epikote 3003-4F-10 der Firma Shell-Chemie),

200 Teile   feinteiliger silikatischer Füllstoff vom Quarzsand-Typ und

2 Teile   Fluidisierhilfsmittel auf Basis pyrogener Kieselsäure.

Mit Mahlaggregaten wurde die Korngrößenverteilung so eingestellt, daß mindestens 90 Massenprozent der Pulverlackpartikel eine Teilchengröße zwischen 1 und 25 $\mu$m aufweisen (d 90 = 1 bis 25 $\mu$m). Die maximale Teilchengröße beträgt für mindestens 99 Massenprozent der Teilchen $\leq$ 100 $\mu$m, die mittlere Teilchengröße liegt bei 9 $\mu$m. Die Steilheit S beträgt 250.

Dieser Pulverlack 1 wurde auf einen Dosenrumpf (Öffnung $\varnothing$ 73 mm, Rumpflänge = 110 mm) mittels geeignetem Equipment appliziert, 30 s bei 280 °C Objekttemperatur eingebrannt und dann einem Enamelratertest unterzogen: Die beschichtete Dose wurde in eine Cu/Cd Standardlösung S475 (Leitwert 2,2 $\pm$ 0,2 mS/cm) getaucht und als Kathode geschaltet. Während einer Zeit von 30 s wurde eine Spannung von 6,3 V angelegt und die Stromstärke gemessen. Die Stromstärke I = 5 mA wurde bereits bei einer Schichtdicke von 15 $\mu$m nicht überschritten.

Außerdem wurde dieser Pulverlack 1 auf einen verzinnten Dosenrumpf (2,8 mg Auflage/m$^2$) in einer Schichtdicke von 15 $\mu$m appliziert und 30 s bei 280 °C Objekttemperatur eingebrannt. Die so erhaltene Beschichtung wurde einem Sterilisationstest (30 min., 1,6 bar, 128 °C) in verschiedenen Prüfmedien unterzogen. Nach der Sterilisation wurden Wasseraufnahme, (visuell) Haftung und Elastizität geprüft. Die Ergebnisse sind in der Tabelle 1 zusammengefaßt.

Tab. 1

| Prüfergebnisse der Pulverlackbeschichtung 1 (Schichtdicke 15 $\mu$m, d 90 = 1-25 $\mu$m) | | | | | |
|---|---|---|---|---|---|
| | unbel.[3] | $H_2O$ | 3% NaCl[4] | 3% HAc[5] | 2% Milchs.[6] |
| $H_2O$-Aufnahme<br>Haftung[1]<br>T-Bend[2] | -<br>Gt 0<br>T0 | keine<br>Gt 0<br>T0 | keine<br>Gt 0<br>T0 | keine<br>Gt 0<br>T0 | keine<br>Gt 0<br>T0 |

Erläuterungen zu Tabelle 1:
1) Prüfung der Haftung nach der Gitterschnittmethode (DIN 53151)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Beispiel 2

Es wurde analog Beispiel 1 aus den in Beispiel 1 angegebenen Komponenten ein Pulverlack 2 hergestellt. Im Unterschied zu Beispiel 1 wurde die Korngrößenverteilung so eingestellt, daß mindestens 90 Massenprozent der Pulverlackpartikel eine Teilchengröße zwischen 1 und 100 $\mu$m aufweisen (d 90 = 1 bis 100 $\mu$m). Die maximale Teilchengröße beträgt für mindestens 99 Massenprozent der Teilchen < 150 $\mu$m, die mittlere Teilchengröße liegt bei 35 $\mu$m. Die Steilheit S beträgt 100.

Dieser Pulverlack 2 wurde auf einen Dosenrumpf (Öffnung $\varnothing$ 73 mm, Rumpflänge = 110 mm) appliziert, 30 s bei 280 °C Objekttemperatur eingebrannt und dann dem im Beispiel 1 beschriebenen Enamelratertest unterzogen:

Es war eine Mindestschichtdicke von 35 $\mu$m erforderlich, um die Stromstärke I<5 mA zu halten.

Außerdem wurde dieser Pulverlack 2 mittels geeignetem Sprüh-Equipment auf eine verzinnte (2,8 mg-Auflage/m$^2$) Tafel (Größe 20x20 cm$^2$) mit einer Schichtdicke von 80 $\mu$m appliziert und 30 s bei 280 °C Objekttemperatur eingebrannt Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 2 zusammengefaßt.

Tab. 2

| Prüfergebnisse der Pulverlackbeschichtung 2 (Schichtdicke 80 $\mu$m, d 90 = 1-100 $\mu$m) | | | | | |
|---|---|---|---|---|---|
| | unbel.[3] | $H_2O$ | 3% NaCl[4] | 3% HAc[5] | 2% Milchs.[6] |
| $H_2O$-Aufnahme<br>Haftung[1]<br>T-Bend[2] | -<br>Gt 0<br>T0 | keine<br>Gt 0<br>T0 | keine<br>Gt 0<br>T0 | keine<br>Gt 0<br>T0 | keine<br>Gt 0<br>T0 |

Erläuterungen zu Tabelle 2:
1) Prüfung der Haftung nach der Gitterschnittmethode (DIN 53 151)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Beispiel 3

Folgende Komponenten wurden zu dem Pulverlack 3 verarbeitet:
600 Teile     Vernetzungskatalysator enthaltender, handelsüblicher Polyester mit einer Säurezahl von 35 mgKOH/g und einer OH-Zahl von 15 mgKOH/g (Handelsprodukt Grilesta P 7401 der Firma Ems-Chemie),

250 Teile handelsübliches Epoxidharz auf Basis Bisphenol-A mit einem EEW von 600 (Handelsprodukt DER 692 der Firma Dow),

48 Teile Masterbatch von 10 Teilen Verlaufsmittel auf Basis eines oligomeren Acrylates in 90 Teilen eines handelsüblichen Epoxidharzes auf Basis Bisphenol-A mit einem EEW von 800 (Handelsprodukt E 3003-4F-10 der Firma Shell Chemie),

100 Teile feinteiliger silikatischer Füllstoff vom Typ Quarzsand und

2 Teile Fluidisierhilfsmittel vom Typ pyrogene Kieselsäure.

Mit Mahlaggregaten wurde die Korngrößenverteilung so eingestellt, daß mindestens 90 Massenprozent der Pulverlackpartikel eine Teilchengröße zwischen 1 und 25 $\mu$m aufweisen (d 90 = 1 bis 25 $\mu$m). Die maximale Teilchengröße beträgt für mindestens 99 Massenprozent der Teilchen $\leq$ 100 $\mu$m, die mittlere Teilchengröße liegt bei 11 $\mu$m. Die Steilheit S beträgt 200.

Dieser Pulverlack 3 wurde auf einen Dosenrumpf (Öffnung $\varnothing$ 73 mm, Rumpflänge = 110 mm) mittels Sprühaggregaten appliziert, 30 s bei 280 °C Objekttemperatur eingebrannt und dann dem im Beispiel 1 beschriebenen Enamelratertest unterzogen: Die Stromstärke I = 5 mA wurde bereits bei einer Schichtdicke von kleiner als 15 $\mu$m nicht überschritten.

Außerdem wurde dieser Pulverlack 3 mittels Sprühaggregaten auf einen verzinnten Dosenrumpf (2,8 mg Auflage/m$^2$) in einer Schichtdicke von 15 $\mu$m appliziert und 30 s bei 280 °C Objekttemperatur eingebrannt. Die so erhaltene Beschichtung wurde einem Sterilisationstest (30 min, 1,6 bar, 128 °C in verschiedenen Prüfmedien unterzogen. Nach der Sterilisation wurden Wasseraufnahme, Haftung und Elastizität geprüft. Die Ergebnisse sind in der Tabelle 3 zusammengefaßt.

Tab. 3

| Prüfergebnisse der Pulverlackbeschichtung 3 (Schichtdicke 15 $\mu$m, d 90 = 1-25 $\mu$m) | | | | | |
|---|---|---|---|---|---|
| | unbel.[4] | $H_2O$ | 3% NaCl[5] | 3% HAc[6] | 2% Milchs.[7] |
| $H_2O$-Aufnahme 1)<br>Haftung[2]<br>T-Bend[3] | -<br>Gt 0<br>T0 | mäßig<br>Gt 0<br>T0 | mäßig<br>Gt 0<br>T0 | stark<br>Gt 0<br>T0 | stark<br>Gt 0<br>T0 |

Erläuterungen zu Tabelle 3:

1) visuelle Beurteilung: Untersuchung auf Trübung o.ä.

2) Prüfung der Haftung nach der Gitterschnittmethode (DIN 53 151)

3) Prüfung nach den ECCA (European Coil Coating Association)-Vorschriften

4) Untersuchung der unbelasteten Beschichtung vor der Sterilisation

5) Prüfmedium = 3%ige wäßrige Kochsalzlösung

6) Prüfmedium = 3%ige wäßrige Essigsäure

7) Prüfmedium = 2%ige wäßrige Milchsäure

Beispiel 4

Es wurde analog Beispiel 3 aus den in Beispiel 3 angegebenen Komponenten ein Pulverlack 4 hergestellt. Im Unterschied zu Beispiel 3 wurde die Korngrößenverteilung so eingestellt, daß mindestens 90 Massenprozent der Pulverlackpartikel eine Teilchengröße zwischen 1 und 100 $\mu$m aufweisen (d 90 = 1 bis 100 $\mu$m). Die maximale Teilchengröße beträgt für mindestens 99 Massenprozent der Teilchen < 150 $\mu$m, die mittlere Teilchengröße liegt bei 40 $\mu$m. Die Steilheit S beträgt 90.

Dieser Pulverlack 4 wurde auf einen Dosenrumpf (Öffnung $\varnothing$ 73 mm, Rumpflänge = 110 mm) appliziert, 30 s bei 280 °C Objekttemperatur eingebrannt und dann dem im Beispiel 1 beschriebenen Enamelratertest unterzogen:

Es war eine Mindestschichtdicke von 35 $\mu$m erforderlich, um die Stromstärke I<5 mA zu halten.

Außerdem wurde dieser Pulverlack 4 auf eine verzinnte (2,8 mg Auflage/m$^2$) Tafel (Größe 20x20 cm$^2$) mit einer Schichtdicke von 80 $\mu$m appliziert und 30 s bei 280 °C Objekttemperatur eingebrannt. Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 4 zusammengefaßt.

EP 0 560 792 B1

Tab. 4

| Prüfergebnisse der Pulverlackbeschichtung 4 (Schichtdicke 80 $\mu$m, d 90 = 1-100 $\mu$m) | | | | | |
|---|---|---|---|---|---|
| 2% | unbel.[3] | $H_2O$ | 3% NaCl[4] | 3% HAc[5] | Milchs.[6] |
| $H_2O$-Aufnahme<br>Haftung[1]<br>T-Bend[2] | -<br>Gt 0<br>T2 | mäßig<br>Gt 0<br>T2 | mäßig<br>Gt 0<br>T2 | stark<br>Gt 0<br>T3 | stark<br>Gt 0<br>T3 |

Erläuterungen zu Tabelle 4:
1) Prüfung der Haftung nach der Gitterschnittmethode (DIN 53 151)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Beispiel 5

Es wurde aus folgenden Komponenten ein Pulverlack 5 hergestellt:

400 Teile Vernetzungskatalysator enthaltender, handelsüblicher Polyester mit einer Säurezahl von 80 mgKOH/g, einer OH-Zahl von ca. 20 mgKOH/g, aufgebaut aus Terephthalsäure, Trimellithsäure, Adipinsäure, Ethylenglykol und Neopentylglykol (Handelsprodukt Grilesta V 72-6 der Firma Ems-Chemie),

400 Teile handelsübliches Epoxidharz auf Basis Bis- phenol-A mit einem EEW von 750 (Handelsprodukt XB 4393 der Firma Ciba Geigy),

100 Teile Titandioxid vom Rutil-Typ,

93 Teile feinteiliger silikatischer Füllstoff vom Typ Quarzsand,

5 Teile Verlaufsmittel auf Basis oligomeres Acrylat und

2 Teile Fluidisierhilfsmittel auf $SiO_2$-Basis.

Mit Mahlaggregaten wurde die Korngrößenverteilung so eingestellt, daß mindestens 90 Massenprozent der Pulverlackpartikel eine Teilchengröße zwischen 5 und 15 $\mu$m aufweisen (d 90 = 5 bis 15 $\mu$m). Die maximale Teilchengröße beträgt für mindestens 99 Massenprozent der Teilchen $\leq$100 $\mu$m, die mittlere Teilchengröße liegt bei 8 $\mu$m. Die Steilheit S beträgt 250.

Dieser Pulverlack 5 wurde auf einen Dosenrumpf (Öffnung $\emptyset$ 73 mm, Rumpflänge = 110 mm) appliziert, 30 s bei 280 °C Objekttemperatur eingebrannt und dann dem in Beispiel 1 beschriebenen Enamelratertest unterzogen: Die Stromstärke I = 5 mA wurde bereits bei einer Schichtdicke von kleiner als 15 $\mu$m nicht überschritten.

Außerdem wurde dieser Pulverlack 5 auf einen verzinnten Dosenrumpf (2,8 mg Auflage/m$^2$) in einer Schichtdicke von 15 $\mu$m appliziert und 30 s bei 280 °C Objekttemperatur eingebrannt. Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 5 Zusammengefaßt.

10

Tab. 5

| Prüfergebnisse der Pulverlackbeschichtung 5 (Schichtdicke 15 $\mu$m, d 90 = 5-15 $\mu$m) | | | | | |
|---|---|---|---|---|---|
| | unbel.[3] | $H_2O$ | 3% NaCl[4] | 3% HAc[5] | 2% Milchs.[6] |
| $H_2O$-Aufnahme | - | keine | keine | keine | keine |
| Haftung[1] | Gt 0 | Gt 0 | Gt 0 | Gt 0 | Gt 0 |
| T-Bend[2] | | T0 | T0 | T0 | T0 | T0 |

Erläuterungen zu Tabelle 5:
1) Prüfung der Haftung nach der Gitterschnittmethode (DIN 53 153)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Beispiel 6

Es wurde analog Beispiel 5 aus den in Beispiel 5 angegebenen Komponenten ein Pulverlack 6 hergestellt. Im Unterschied zu Beispiel 5 wurde die Korngroßenverteilung so eingestellt, daß mindestens 90 Massenprozent der Pulverlackpartikel eine Teilchengröße zwischen 1 und 100 $\mu$m aufweisen (d 90 = 1 bis 100 $\mu$m). Die maximale Teilchengröße beträgt für mindestens 99 Massenprozent der Teilchen $\leq$ 150 $\mu$m, die mittlere Teilchengröße liegt bei 40 $\mu$m. Die Steilheit S beträgt 100.

Dieser Pulverlack 6 wurde auf einen Dosenrumpf (Öffnung $\varnothing$ 73 mm, Rumpflänge = 110 mm) appliziert, 30 s bei 280°C Objekttemperatur eingebrannt und dann dem im Beispiel 1 beschriebenen Enamelratertest unterzogen:

Es ist eine Mindestschichtdicke von 25 $\mu$m erforderlich, um die Stromstärke I<5 mA zu halten.

Außerdem wurde dieser Pulverlack 6 auf eine verzinnte (2,8 mg Auflage/m$^2$) Tafel (Größe 20x20 cm$^2$) mit einer Schichtdicke von 80 $\mu$m appliziert und 30 s bei 280 °C Objekttemperatur eingebrannt. Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 6 zusammengefaßt.

Tab. 6

| Prüfergebnisse der Pulverlackbeschichtung 6 (Schichtdicke 80 $\mu$m, d 90 = 1-100 $\mu$m) | | | | | |
|---|---|---|---|---|---|
| | unbel.[3] | $H_2O$ | 3% NaCl[4] | 3% HAc[5] | 2% Milchs.[6] |
| $H_2O$-Aufnahme | - | keine | keine | keine | keine |
| Haftung[1] | Gt 0 | Gt 0 | Gt 0 | Gt 0 | Gt 0 |
| T-Bend[2] | | T0 | T0 | T0 | T0 | T0 |

Erläuterungen zu Tabelle 6:
1) Prüfung der Haftung nach der Gitterschnittmethode (DIN 53 151)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Außerdem wurden Pack-Tests in Dosen durchgeführt, deren Schweißnähte mit dem Pulverlack 6 abgedeckt waren (Applikation mittels geeigneter Sprühaggregate, Aushärtung 30 s bei 280 °C Objekttemperatur, Schichtdicke 60 - 80 $\mu$m, Innenbeschichtung der Dosen mit konventionellem, handelsüblichem Spritzlack). Die Konservendosen wurden mit den Füllgütern Wasser, 3%ige Essigsäure und 2%ige Milchsäure befüllt und verschlossen. Die Dosen wurden nun 30 min bei 1,6 bar und 128 °C sterilisiert und anschließend bei 37°C gelagert.

Nach 6 Monaten Lagerung war noch keinerlei Schädigung des Lackfilms zu erkennen.

Beispiel 7

Folgende Komponenten wurden zu dem Pulverlack 7 verarbeitet:

425 Teile    Veresterungskatalysator enthaltender, handelsüblicher Polyester mit einer Säurezahl von 80 mgKOH/g und einer OH-Zahl von 20 mgKOH/g (Handelsprodukt Grilesta V 72-6 der Firma Ems-Chemie),

475 Teile    handelsübliches Epoxidharz auf Basis Bisphenol-A mit einem EEW von 800 (Handelsprodukt XZ 86795 der Firma Dow),

50 Teile    Talkum,

48 Teile    Masterbach von 10 Teilen Verlaufsmittel auf Basis eines oligomeren Acrylates in 90 Teilen des o.g. handelsüblichen Polyesters mit einer Säurezahl von 80 mgKOH/g und einer OH-Zahl von 20 mg KOH/g und

2 Teile    Fluidisierhilfsmittel auf Basis pyrogene Kieselsäure.

Mit Mahlaggregaten wurde die Kornverteilung so eingestellt, daß 90 Massenprozent der Pulverlackpartikel eine Teilchengröße zwischen 1 und 25 $\mu$m aufweisen (d 90 = 1 bis 25 $\mu$m). Die maximale Teilchengröße beträgt für mindestens 99 Massenprozent der Teilchen $\leq$ 100 $\mu$m, die mittlere Teilchengröße liegt bei 14 $\mu$m. Die Steilheit S beträgt 200.

Dieser Pulverlack 7 wurde auf einen Dosenrumpf (Öffnung $\varnothing$ 73 mm, Rumpflänge = 110 mm) appliziert, 30 s bei 280 °C Objekttemperatur eingebrannt und dann dem in Beispiel 1 beschriebenen Enamelratertest unterzogen:

Es ist eine Mindestschichtdicke von 15 $\mu$m erforderlich, um die Stromstärke I<5 mA zu halten.

Außerdem wurde dieser Pulverlack 7 auf eine verzinnte (2,8 mg Auflage/m$^2$) Tafel (Größe 20x20 cm$^2$) mit einer Schichtdicke von 30 $\mu$m appliziert und 30 s bei 280 °C Objekttemperatur eingebrannt. Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 7 zusammengefaßt.

Tab. 7

| Prüfergebnisse der Pulverlackbeschichtung 7 (Schichtdicke 30 $\mu$m, d 90 = 1-25 $\mu$m) | | | | | |
|---|---|---|---|---|---|
| | unbel.[3] | H$_2$O | 3% NaCl[4] | 3% HAc[5] | 2% Milchs.[6] |
| H$_2$O-Aufnahme | - | stark | stark | stark | stark |
| Haftung[1] | Gt 0 | Gt 0 | Gt 2 | Gt 0 | Gt 2 |
| T-Bend[2] | T0 | T0 | T0 | T0 | T0 |

Erläuterungen zu Tabelle 7:
1) Prüfung der Haftung nach der Gitterschnittmethode (DIN 53 151)
2) Prüfung nach den ECCA (European Coil Coating Association)-Vorschriften
3) Untersuchung der innbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

Beispiel 8

Es wurde analog Beispiel 7 aus den in Beispiel 7 angegebenen Komponenten ein Pulverlack 8 hergestellt. Im Unterschied zu Beispiel 7 wurde die Korngrößenverteilung so eingestellt, daß mindestens 90 Massenprozent der Pulverlackpartikel eine Teilchengröße zwischen 1 und 100 $\mu$m aufweisen (d 90 = 1 bis 100 $\mu$m). Die maximale Teilchengröße beträgt für mindestens 99 Massenprozent der Teilchen $\leq$ 150 $\mu$m, die mittlere Teilchengröße liegt bei 35 $\mu$m. Die Steilheit S beträgt 150.

Dieser Pulverlack 8 wurde auf einen Dosenrumpf (Öffnung $\varnothing$ 73 mm, Rumpflänge = 110 mm) appliziert, 30 s bei 280 °C Objekttemperatur eingebrannt und dann dem Enamelratertest unterzogen.

Es ist eine Mindestschichtdicke von 35 $\mu$m erforderlich, um die Stromstärke I<5 mA zu halten.

Außerdem wurde dieser Pulverlack 8 auf eine verzinnte (2,8 mg Auflage/$m^2$) Tafel (Größe 20x20 $cm^2$) mit einer Schichtdicke von 80 $\mu$m appliziert und 30 s bei 280 °C Objekttemperatur eingebrannt. Die so erhaltene Beschichtung wurde einem Sterilisationstest (30 min, 1,6 bar, 128 °C) in verschiedenen Prüfmedien unterzogen. Nach der Sterilisation wurden Wasseraufnahme (visuell), Haftung und Elastizität geprüft. Die Ergebnisse sind in der Tabelle 8 zusammengefaßt.

Tab. 8

| Prüfergebnisse der Pulverlackbeschichtung 8 (Schichtdicke 80 $\mu$m, d 90 = 1-100 $\mu$m) | | | | | |
|---|---|---|---|---|---|
| | unbel.[3] | $H_2O$ | 3% NaCl[4] | 3% HAc[5] | 2% Milchs.[6] |
| $H_2O$-Aufnahme | - | stark | stark | stark | stark |
| Haftung[1] | Gt 0 | Gt 0 | Gt 2 | Gt 0 | Gt 2 |
| T-Bend[2] | T2 | T2 | T3 | T3 | T4 |

Erläuterungen zu Tabelle 8:
1) Prüfung der Haftung nach der Gitterschnittmethode (DIN 53 151)
2) Prüfung nach den ECCA (European Coil Coating Association)-Vorschriften
3) Untersuchung der unbelasteten Beschichtung vor der Sterilisation
4) Prüfmedium = 3%ige wäßrige Kochsalzlösung
5) Prüfmedium = 3%ige wäßrige Essigsäure
6) Prüfmedium = 2%ige wäßrige Milchsäure

**Patentansprüche**
**Patentansprüche für folgende Vertragstaaten : AT, BE, CH, DE, DK, FR, GB, IT, LI, NL, SE**

1. Pulverlack für die Innenbeschichtung von Verpackungsbehältern auf der Basis von Epoxidharzen und carboxylgruppenhaltigen Polyestern, dadurch gekennzeichnet, daß
   1) der Pulverlack
   A) mindestens einen Polyester mit einer Säurezahl von 25 bis 120 mg KOH/g und einer OH-Zahl >10 mg KOH/g und
   B) mindestens ein Epoxidharz mit einem Epoxidäquivalentgewicht von 400 bis 3000
   enthält und
   2) der Pulverlack eine derartige Korngrößenverteilung aufweist, daß
   a) mindestens 90 Massenprozent der Pulverlackteilchen eine Teilchengröße zwischen 1 und 60 $\mu$m aufweisen,
   b) die maximale Teilchengröße der Pulverlackteilchen für mindestens 99 Massenprozent der Teilchen ≦100 $\mu$m beträgt,
   c) die mittlere Teilchengröße der Pulverlackteilchen zwischen 5 und 20 $\mu$m liegt und
   d) die Steilheit der Kornverteilungskurve am Wendepunkt ≥ 100 ist.

2. Pulverlack nach Anspruch 1, dadurch gekennzeichnet, daß er eine derartige Korngrößenverteilung aufweist, daß
   a) mindestens 90 Massenprozent der Pulverlackteilchen eine Teilchengröße zwischen 1 und 40 $\mu$m aufweisen,
   b) die maximale Teilchengröße der Pulverlackteilchen für mindestens 99 Massenprozent der Teilchen ≦ 60 $\mu$m beträgt,
   c) die mittlere Teilchengröße der Pulverlackteilchen zwischen 5 und 12 $\mu$m liegt und
   d) die Steilheit der Kornverteilungskurve am Wendepunkt ≥ 150 ist.

3. Pulverlack nach Anspruch 1, dadurch gekennzeichnet, daß er eine derartige Korngrößenverteilung aufweist, daß
   a) mindestens 90 Massenprozent der Pulverlackteilchen eine Teilchengröße zwischen 5 und 25 $\mu$m aufweisen,
   b) die maximale Teilchengröße der Pulverlackteilchen für mindestens 99 Massenprozente der Teilchen ≦ 40 $\mu$m beträgt,
   c) die mittlere Teilchengröße der Pulverlackteilchen zwischen 5 und 12 $\mu$m liegt und

d) die Steilheit der Kornverteilungskurve am Wendepunkt ≥ 200 ist.

4. Pulverlack für die Schweißnahtabdeckung von Verpackungsbehältern auf der Basis von Epoxidharzen und carboxylgruppenhaltigen Polyestern, dadurch gekennzeichnet, daß

1. der Pulverlack
A) mindestens einen Polyester mit einer Säurezahl von 25 bis 120 mg KOH/g und einer OH-Zahl >10 mg KOH/g und
B) mindestens ein Epoxidharz mit einem Epoxidäquivalentgewicht von 400 bis 3000
enthält und

2. der Pulverlack eine derartige Korngrößenverteilung aufweist, daß
a) mindestens 90 Massenprozent der Pulverlackteilchen eine Teilchengröße zwischen 1 und 100 $\mu$m aufweisen,
b) die maximale Teilchengröße der Pulverlackteilchen für mindestens 99 Massenprozent der Teilchen ≦150 $\mu$m beträgt,
c) die mittlere Teilchengröße der Pulverlackteilchen zwischen > 20 und 60 $\mu$m liegt und
d) die Steilheit der Kornverteilungskurve am Wendepunkt ≥ 50 ist.

5. Pulverlack nach Anspruch 4, dadurch gekennzeichnet, daß er eine derartige Korngrößenverteilung aufweist, daß
a) mindestens 90 Massenprozent der Pulverlackteilchen eine Teilchengröße zwischen 5 und 100 $\mu$m aufweisen,
b) die maximale Teilchengröße der Pulverlackteilchen für mindestens 99 Massenprozent der Teilchen ≦ 100 $\mu$m beträgt.
c) die mittlere Teilchengröße der Pulverlackteilchen zwischen 25 und 40 $\mu$m liegt und
d) die Steilheit der Kornverteilungskurve am Wendepunkt > 100 ist.

6. Pulverlack nach einem der Ansprüche 1 bis 5, dadurch gekennzeichnet, daß er
A) mindestens einen Polyester mit einer Säurezahl von 30 bis 90 mg KOH/g und einer OH-Zahl von 15 bis 30 mg KOH/g und
B) mindestens ein Epoxidharz mit einem Epoxidäquivalentgewicht von 600 bis 900
enthält.

7. Pulverlack nach einem der Ansprüche 1 bis 6, dadurch gekennzeichnet, daß er als Komponente B Epoxidharze auf Basis Bisphenol-A und/oder epoxidierte Novolakharze enthält.

8. Pulverlack nach einem der Ansprüche 1 bis 7, dadurch gekennzeichnet, daß er als Komponente A Polyester auf Basis Terephthal- und/oder Trimellithsäure und Ethylenglykol und/oder Neopentylglykol enthält.

9. Pulverlack nach einem der Ansprüche 1 bis 8, dadurch gekennzeichnet, daß der Pulverlack
A) 19 bis 80 Gew.-%, bezogen auf das Gesamtgewicht des Pulverlacks, der Polyesterkomponen- te A und
B) 19 bis 80 Gew.-%, bezogen auf das Gesamtgewicht des Pulverlacks, der Epoxidharzkomponente B
enthält.

10. Verfahren zur Innenbeschichtung von Verpackungsbehältern, dadurch gekennzeichnet, daß ein Pulverlack nach einem der Ansprüche 1 bis 3 oder 6 bis 9 mit einer Schichtdicke <15 $\mu$m aufgebracht wird.

11. Verfahren zur Schweißnahtabdeckung von Verpackungsbehältern, dadurch gekennzeichnet, daß ein Pulverlack nach einem der Ansprüche 4 bis 9 aufgebracht wird.

12. Verwendung der Pulverlacke nach einem der Ansprüche 1 bis 3 oder 6 bis 9 zur Innenbeschichtung von Verpackungsbehältern.

13. Verwendung der Pulverlacke nach einem der Ansprüche 4 bis 9 zur Schweißnahtabdeckung von Verpackungsbehältern.

# EP 0 560 792 B1

**Patentansprüche für folgenden Vertragsstaat : ES**

1. Verfahren zur Herstellung eines Pulverlacks für die Innenbeschichtung von Verpackungsbehältern auf der Basis von Epoxidharzen und carboxylgruppenhaltigen Polyestern, dadurch gekennzeichnet, daß
   1) der Pulverlack
      A) mindestens einen Polyester mit einer Säurezahl von 25 bis 120 mg KOH/g und einer OH-Zahl >10 mg KOH/g und
      B) mindestens ein Epoxidharz mit einem Epoxidäquivalentgewicht von 400 bis 3000 enthält und
   2) die Korngrößenverteilung des Pulverlacks so eingestellt wird, daß
      a) mindestens 90 Massenprozent der Pulverlackteilchen eine Teilchengröße zwischen 1 und 60 $\mu$m aufweisen,
      b) die maximale Teilchengröße der Pulverlackteilchen für mindestens 99 Massenprozent der Teilchen ≦100 $\mu$m beträgt,
      c) die mittlere Teilchengröße der Pulverlackteilchen zwischen 5 und 20 $\mu$m liegt und
      d) die Steilheit der Kornverteilungskurve am Wendepunkt ≧ 100 ist.

2. Verfahren nach Anspruch 1, dadurch gekennzeichnet, daß die Korngrößenverteilung so eingestellt wird, daß
   a) mindestens 90 Massenprozent der Pulverlackteilchen eine Teilchengröße zwischen 1 und 40 $\mu$m aufweisen,
   b) die maximale Teilchengröße der Pulverlackteilchen für mindestens 99 Massenprozent der Teilchen ≦ 60 $\mu$m beträgt,
   c) die mittlere Teilchengröße der Pulverlackteilchen zwischen 5 und 12 $\mu$m liegt und
   d) die Steilheit der Kornverteilungskurve am Wendepunkt ≧ 150 ist.

3. Verfahren nach Anspruch 1, dadurch gekennzeichnet, daß die Korngrößenverteilung so eingestellt wird, daß
   a) mindestens 90 Massenprozent der Pulverlackteilchen eine Teilchengröße zwischen 5 und 25 $\mu$m aufweisen,
   b) die maximale Teilchengröße der Pulverlackteilchen für mindestens 99 Massenprozente der Teilchen ≦ 40 $\mu$m beträgt,
   c) die mittlere Teilchengröße der Pulverlackteilchen zwischen 5 und 12 $\mu$m liegt und
   d) die Steilheit der Kornverteilungskurve am Wendepunkt ≧ 200 ist.

4. Verfahren zur Herstellung eines Pulverlacks für die Schweißnahtabdeckung von Verpackungsbehältern auf der Basis von Epoxidharzen und carboxylgruppenhaltigen Polyestern, dadurch gekennzeichnet, daß
   1. der Pulverlack
      A) mindestens einen Polyester mit einer Säurezahl von 25 bis 120 mg KOH/g und einer OH-Zahl >10 mg KOH/g und
      B) mindestens ein Epoxidharz mit einem Epoxidäquivalentgewicht von 400 bis 3000 enthält und
   2. die Korngrößenverteilung des Pulverlacks so eingestellt wird, daß
      a) mindestens 90 Massenprozent der Pulverlackteilchen eine Teilchengröße zwischen 1 und 100 $\mu$m aufweisen,
      b) die maximale Teilchengröße der Pulverlackteilchen für mindestens 99 Massenprozent der Teilchen ≦150 $\mu$m beträgt,
      c) die mittlere Teilchengröße der Pulverlackteilchen zwischen > 20 und 60 $\mu$m liegt und
      d) die Steilheit der Kornverteilungskurve am Wendepunkt ≧ 50 ist.

5. Verfahren nach Anspruch 4, dadurch gekennzeichnet, daß die Korngrößenverteilung so eingestellt wird, daß
   a) mindestens 90 Massenprozent der Pulverlackteilchen eine Teilchengröße zwischen 5 und 100 $\mu$m aufweisen,
   b) die maximale Teilchengröße der Pulverlackteilchen für mindestens 99 Massenprozent der Teilchen ≦ 100 $\mu$m beträgt.
   c) die mittlere Teilchengröße der Pulverlackteilchen zwischen 25 und 40 $\mu$m liegt und
   d) die Steilheit der Kornverteilungskurve am Wendepunkt > 100 ist.

EP 0 560 792 B1

6. Verfahren nach einem der Ansprüche 1 bis 5, dadurch gekennzeichnet, daß der Pulverlack
A) mindestens einen Polyester mit einer Säurezahl von 30 bis 90 mg KOH/g und einer OH-Zahl von 15 bis 30 mg KOH/g und
B) mindestens ein Epoxidharz mit einem Epoxidäquivalentgewicht von 600 bis 900
enthält.

7. Verfahren nach einem der Ansprüche 1 bis 6, dadurch gekennzeichnet, daß der Pulverlack als Komponente B Epoxidharze auf Basis Bisphenol-A und/oder epoxidierte Novolakharze enthält.

8. Verfahren nach einem der Ansprüche 1 bis 7, dadurch gekennzeichnet, daß der Pulverlack als Komponente A Polyester auf Basis Terephthal- und/oder Trimellithsäure und Ethylenglykol und/oder Neopentylglykol enthält.

9. Verfahren nach einem der Ansprüche 1 bis 8, dadurch gekennzeichnet, daß der Pulverlack
A) 19 bis 80 Gew.-%, bezogen auf das Gesamtgewicht des Pulverlacks, der Polyesterkomponente A und
B) 19 bis 80 Gew.-%, bezogen auf das Gesamtgewicht des Pulverlacks, der Epoxidharzkomponente B
enthält.

10. Verfahren zur Innenbeschichtung von Verpackungsbehältern, dadurch gekennzeichnet, daß ein Pulverlack, der nach einem Verfahren nach einem der Ansprüche 1 bis 3 oder 6 bis 9 hergestellt worden ist, mit einer Schichtdicke <15 $\mu$m aufgebracht wird.

11. Verfahren zur Schweißnahtabdeckung von Verpackungsbehältern, dadurch gekennzeichnet, daß ein Pulverlack, der nach einem Verfahren nach einem der Ansprüche 4 bis 9 hergestellt worden ist, aufgebracht wird.

12. Verwendung der nach einem Verfahren nach einem der Ansprüche 1 bis 3 oder 6 bis 9 hergestellten Pulverlacke zur Innenbeschichtung von Verpackungsbehältern.

13. Verwendung der nach einem Verfahren nach einem der Ansprüche 4 bis 9 hergestellten Pulverlacke zur Schweißnahtabdeckung von Verpackungsbehältern.

## Claims
### Claims for the following Contracting States : AT, BE, CH, DE, DK, FR, GB, IT, LI, NL, SE

1. Powder coating for the coating of packaging container interiors, based on epoxy resins and carboxyl-containing polyesters, characterized in that
1) the powder coating contains
A) at least one polyester having an acid value of 25 to 120 mg of KOH/g and an OH value > 10 mg of KOH/g and
B) at least one epoxy resin having an epoxide equivalent weight of 400 to 3000, and
2) the powder coating has such a particle size distribution that
a) at least 90% by mass of the powder coating particles have a particle size between 1 and 60 $\mu$m,
b) the maximum particle size of the powder coating particles for at least 99% by mass of the particle is $\leq$ 100 $\mu$m,
c) the average particle size of the powder coating particles is between 5 and 20 $\mu$m, and
d) the slope of the particle distribution curve at the inflection point is $\geq$ 100.

2. Powder coating according to Claim 1, characterized in that it has such a particle size distribution that
a) at least 90% by mass of the powder coating particles have a particle size between 1 and 40 $\mu$m,
b) the maximum particle size of the powder coating particles for at least 99% by mass of the particles is $\leq$ 60 $\mu$m,
c) the average particle size of the powder coating particles is between 5 and 12 $\mu$m, and
d) the slope of the particle distribution curve at the inflection point is $\geq$ 150.

16

3. Powder coating according to Claim 1, characterized in that it has such a particle size distribution that
   a) at least 90% by mass of the powder coating particles have a particle size between 5 and 25 $\mu$m,
   b) the maximum particle size of the powder coating particles for at least 99% by mass of the particles is $\leq$ 40 $\mu$m,
   c) the average particle size of the powder coating particles is between 5 and 12 $\mu$m, and
   d) the slope of the particle distribution curve at the inflection point is $\geq$ 200.

4. Powder coating for the coating of packaging container weld seams based on epoxy resins and carboxyl-containing polyesters, characterized in that
   1. the powder coating contains
      A) at least one polyester having an acid value of 25 to 120 mg of KOH/g and an OH value > 10 mg of KOH/g, and
      B) at least one epoxy resin having an epoxide equivalent weight of 400 to 3000, and
   2. the powder coating has such a particle size distribution that
      a) at least 90% by mass of the powder coating particles have a particle size between 1 and 100 $\mu$m,
      b) the maximum particle size of the powder coating particles for at least 99% by weight of the particles is $\leq$ 150 $\mu$m,
      c) the average particle size of the powder coating particles is between > 20 and 60 $\mu$m, and
      d) the slope of the particle distribution curve at the inflection point is $\geq$ 50.

5. Powder coating according to Claim 4, characterized in that it has such a particle size distribution that
   a) at least 90% by mass of the powder coating particles have a particle size between 5 and 100 $\mu$m,
   b) the maximum particle size of the powder coating particles for at least 99% by mass of the particles is $\leq$ 100 $\mu$m.
   c) the average particle size of the powder coating particles is between 25 and 40 $\mu$m, and
   d) the slope of the particle distribution curve at the inflection point is > 100.

6. Powder coating according to one of claims 1 to 5, characterized in that it contains
   A) at least one polyester having an acid value of 30 to 90 mg of KOH/g and an OH value of 15 to 30 mg of KOH/g, and
   B) at least one epoxy resin having an epoxide equivalent weight of 600 to 900.

7. Powder coating according to one of Claims 1 to 6, characterized in that it contains, as component B, epoxy resins based on bisphenol A and/or epoxidized novolak resins.

8. Powder coating according to one of Claims 1 to 7, characterized in that it contains, as component A, polyesters based on terephthalic and/or trimellitic acid and ethylene glycol and/or neopentyl glycol.

9. Powder coating according to one of Claims 1 to 8, characterized in that the powder coating contains
   A) 19 to 80% by weight, based on the total weight of the powder coating, of the polyester component A and
   B) 19 to 80% by weight, based on the total weight of the powder coating, of the epoxy resin component B.

10. Process for the coating of packaging container interiors, characterized in that a powder coating according to one of Claims 1 to 3 or 6 to 9 is applied at a film thickness of < 15 $\mu$m.

11. Process for the coating of packaging container weld seams, characterized in that a powder coating according to one of Claims 4 to 9 is applied.

12. Use of the powder coatings according to one of Claims 1 to 3 or 6 to 9 for the coating of packaging container interiors.

13. Use of the powder coatings according to one of Claims 4 to 9 for the coating of packaging container weld seams.

EP 0 560 792 B1

**Claims for the following Contracting State : ES**

1. Process for preparing a powder coating for the coating of packaging container interiors, based on epoxy resins and carboxyl-containing polyesters, characterized in that
   1) the powder coating contains
      A) at least one polyester having an acid value of 25 to 120 mg of KOH/g and an OH value > 10 mg of KOH/g and
      B) at least one epoxy resin having an epoxide equivalent weight of 400 to 3000, and
   2) the particle size distribution of the powder coating is adjusted in such a way that
      a) at least 90% by mass of the powder coating particles have a particle size between 1 and 60 $\mu$m,
      b) the maximum particle size of the powder coating particles for at least 99% by mass of the particles is $\leq$ 100 $\mu$m,
      c) the average particle size of the powder coating particles is between 5 and 20 $\mu$m, and
      d) the slope of the particle distribution curve at the inflection point is $\geq$ 100.

2. Process according to Claim 1, characterized in that the particle size distribution is adjusted in such a way that
      a) at least 90% by mass of the powder coating particles have a particle size between 1 and 40 $\mu$m,
      b) the maximum particle size of the powder coating particles for at least 99% by mass of the particles is $\leq$ 60 $\mu$m,
      c) the average particle size of the powder coating particles is between 5 and 12 $\mu$m, and
      d) the slope of the particle distribution curve at the inflection point is $\geq$ 150.

3. Process according to claim 1, characterized in that the particle size distribution is adjusted in such a way that
      a) at least 90% by mass of the powder coating particles have a particle size between 5 and 25 $\mu$m,
      b) the maximum particle size of the powder coating particles for at least 99% by mass of the particles is $\leq$ 40 $\mu$m,
      c) the average particle size of the powder coating particles is between 5 and 12 $\mu$m, and
      d) the slope of the particle distribution curve at the inflection point is $\geq$ 200.

4. Process for preparing a powder coating for the coating of packaging container weld seams based on epoxy resins and carboxyl-containing polyesters, characterized in that
   1. the powder coating contains
      A) at least one polyester having an acid value of 25 to 120 mg of KOH/g and an OH value > 10 mg of KOH/g, and
      B) at least one epoxy resin having an epoxide equivalent weight of 400 to 3000, and
   2. the particle size distribution of the powder coating is adjusted in such a way that
      a) at least 90% by mass of the powder coating particles have a particle size between 1 and 100 $\mu$m,
      b) the maximum particle size of the powder coating particles for at least 99% by weight of the particles is $\leq$ 150 $\mu$m,
      c) the average particle size of the powder coating particles is between > 20 and 60 $\mu$m, and
      d) the slope of the particle distribution curve at the inflection point is $\geq$ 50.

5. Process according to Claim 4, characterized in that the particle size distribution is adjusted in such a way that
      a) at least 90% by mass of the powder coating particles have a particle size between 5 and 100 $\mu$m,
      b) the maximum particle size of the powder coating particles for at least 99% by mass of the particles is $\leq$ 100 $\mu$m.
      c) the average particle size of the powder coating particles is between 25 and 40 $\mu$m, and
      d) the slope of the particle distribution curve at the inflection point is > 100.

6. Process according to one of Claims 1 to 5, characterized in that the powder coating contains
      A) at least one polyester having an acid value of 30 to 90 mg of KOH/g and an OH value of 15 to 30 mg of KOH/g, and
      B) at least one epoxy resin having an epoxide equivalent weight of 600 to 900.

18

7. Process according to one of Claims 1 to 6, characterized in that the powder coating contains, as component B, epoxy resins based on bisphenol A and/or epoxidized novolak resins.

8. Process according to one of claims 1 to 7, characterized in that the powder coating contains, as component A, polyesters based on terephthalic and/or trimellitic acid and ethylene glycol and/or neopentyl glycol.

9. Process according to one of Claims 1 to 8, characterized in that the powder coating contains
   A) 19 to 80% by weight, based on the total weight of the powder coating, of the polyester component A and
   B) 19 to 80% by weight, based on the total weight of the powder coating, of the epoxy resin component B.

10. Process for the coating of packaging container interiors, characterized in that a powder coating which has been prepared by a process according to one of Claims 1 to 3 or 6 to 9 is applied at a film thickness of < 15 $\mu$m.

11. Process for the coating of packaging container weld seams, characterized in that a powder coating which has been prepared by a process according to one of Claims 4 to 9 is applied.

12. Use of the powder coatings prepared by a process according to one of Claims 1 to 3 or 6 to 9 for the coating of packaging container interiors.

13. Use of the powder coatings prepared by a process according to one of Claims 4 to 9 for the coating of packaging container weld seams.

**Revendications**
**Revendications pour les Etats contractants suivants : AT, BE, CH, DE, DK, FR, GB, IT, LI, NL, SE**

1. Laque en poudre pour le revêtement interne de récipients d'emballage à base de résines époxydes et de polyesters contenant des groupements carboxyles, caractérisée en ce que
   1) la laque en poudre contient
   A) au moins un polyester ayant un indice d'acidité de 25 à 120 mg de KOH/g et un indice OH > 10 mg de KOH/g et
   B) au moins une résine époxyde ayant un poids équivalent en époxyde de 400 à 3 000
   et en ce que
   2) la laque en poudre présente une répartition granulométrique telle que
   a) au moins 90 pour cent en masse des particules de la laque en poudre présentent une grandeur de particule comprise entre 1 et 60 $\mu$m,
   b) la grandeur maximale de particule des particules de la laque en poudre pour au moins 99 pour cent en masse des particules est ≤ 100 $\mu$m,
   c) la grandeur de particule moyenne des particules de la laque en poudre se situe entre 5 et 20 $\mu$m et
   d) la raideur de pente de la courbe de répartition granulométrique au point d'inflexion est ≥ 100.

2. Laque en poudre selon la revendication 1, caractérisée en ce qu'elle présente une répartition granulométrique telle que
   a) au moins 90 pour cent en masse des particules de la laque en poudre présentent une grandeur de particule comprise entre 1 et 40 $\mu$m,
   b) la grandeur maximale de particule des particules de la laque en poudre pour au moins 99 pour cent en masse des particules est ≤ 60 $\mu$m,
   c) la grandeur de particule moyenne des particules de la laque en poudre se situe entre 5 et 12 $\mu$m et
   d) la raideur de pente de la courbe de répartition granulométrique au point d'inflexion est ≥ 150.

3. Laque en poudre selon la revendication 1, caractérisée en ce qu'elle présente une répartition granulométrique telle que

EP 0 560 792 B1

a) au moins 90 pour cent en masse des particules de la laque en poudre présentent une grandeur de particule comprise entre 5 et 25 $\mu$m,

b) la grandeur maximale de particule des particules de la laque en poudre pour au moins 99 pour cent en masse des particules est $\leq$ 40 $\mu$m,

c) la grandeur de particule moyenne des particules de la laque en poudre se situe entre 5 et 12 $\mu$m et

d) la raideur de pente de la courbe de répartition granulométrique au point d'inflexion est $\geq$ 200.

4. Laque en poudre pour le recouvrement de soudure de récipients d'emballage à base de résines époxydes et de polyesters contenant des groupements carboxyles, caractérisée en ce que

1) la laque en poudre contient

A) au moins un polyester ayant un indice d'acidité de 25 à 120 mg de KOH/g et un indice OH > 10 mg de KOH/g et

B) au moins une résine époxyde ayant un poids équivalent en époxyde de 400 à 3 000

et en ce que

2) la laque en poudre présente une répartition granulométrique telle que

a) au moins 90 pour cent en masse des particules de la laque en poudre présentent une grandeur de particule comprise entre 1 et 100 $\mu$m,

b) la grandeur maximale de particule des particules de la laque en poudre pour au moins 99 pour cent en masse des particules est $\leq$ 150 $\mu$m,

c) la grandeur de particule moyenne des particules de la laque en poudre se situe entre > 20 et 60 $\mu$m et

d) la raideur de pente de la courbe de répartition granulométrique au point d'inflexion est $\geq$ 50.

5. Laque en poudre selon la revendication 4, caractérisée en ce qu'elle présente une répartition granulométrique telle que

a) au moins 90 pour cent en masse des particules de la laque en poudre présentent une grandeur de particule comprise entre 5 et 100 $\mu$m,

b) la grandeur maximale de particule des particules de la laque en poudre pour au moins 99 pour cent en masse des particules est $\leq$ 100 $\mu$m,

c) la grandeur de particule moyenne des particules de la laque en poudre se situe entre 25 et 40 $\mu$m et

d) la raideur de pente de la courbe de répartition granulométrique au point d'inflexion est > 100.

6. Laque en poudre selon l'une quelconque des revendications 1 à 5, caractérisée en ce qu'elle contient

A) au moins un polyester ayant un indice d'acidité de 30 à 90 mg de KOH/g et un indice OH de 15 à 30 mg de KOH/g et

B) au moins une résine époxyde ayant un poids équivalent en époxyde de 600 à 900.

7. Laque en poudre selon l'une quelconque des revendications 1 à 6, caractérisée en ce qu'elle contient en tant que composant B des résines époxydes à base de bisphénol A et/ou des résines Novolak époxydées.

8. Laque en poudre selon l'une quelconque des revendications 1 à 7, caractérisée en ce qu'elle contient en tant que composant A des polyesters à base d'acide téréphtalique et/ou d'acide trimellitique et d'éthylèneglycol et/ou de néopentylglycol.

9. Laque en poudre selon l'une quelconque des revendications 1 à 8, caractérisée en ce que la laque en poudre contient

A) de 19 à 80 % en poids, par rapport au poids total de la laque en poudre, du composant de polyester A et

B) de 19 à 80 % en poids, par rapport au poids total de la laque en poudre, du composant de résine époxyde B.

10. Procédé de revêtement interne de récipients d'emballage, caractérisé en ce que l'on applique une laque en poudre selon l'une quelconque des revendications 1 à 3 ou 6 à 9 avec une épaisseur de couche < 15 $\mu$m.

20

EP 0 560 792 B1

11. Procédé de recouvrement de soudure de récipients d'emballage, caractérisé en ce que l'on applique une laque en poudre selon l'une quelconque des revendications 4 à 9.

12. Utilisation des laques en poudre selon l'une quelconque des revendications 1 à 3 ou 6 à 9 pour le revêtement interne de récipients d'emballage.

13. Utilisation des laques en poudre selon l'une quelconque des revendications 4 à 9 pour le recouvrement de soudure de récipients d'emballage.

**Revendications pour l'Etat contractant suivant : ES**

1. Procédé de préparation d'un laque en poudre pour le revêtement interne de récipients d'emballage à base de résines époxydes et de polyesters contenant des groupements carboxyles, caractérisé en ce que
   1) la laque en poudre contient
      A) au moins un polyester ayant un indice d'acidité de 25 à 120 mg de KOH/g et un indice OH > 10 mg de KOH/g et
      B) au moins une résine époxyde ayant un poids équivalent en époxyde de 400 à 3 000
   et en ce que
   2) la répartition granulométrique de la laque en poudre est ajustée de sorte que
      a) au moins 90 pour cent en masse des particules de la laque en poudre présentent une grandeur de particule comprise entre 1 et 60 $\mu$m,
      b) la grandeur maximale de particule des particules de la laque en poudre pour au moins 99 pour cent en masse des particules est ≤ 100 $\mu$m,
      c) la grandeur de particule moyenne des particules de la laque en poudre se situe entre 5 et 20 $\mu$m et
      d) la raideur de pente de la courbe de répartition granulométrique au point d'inflexion est ≥ 100.

2. Procédé selon la revendication 1, caractérisé en ce que la répartition granulométrique est ajustée de sorte que
      a) au moins 90 pour cent en masse des particules de la laque en poudre présentent une grandeur de particule comprise entre 1 et 40 $\mu$m,
      b) la grandeur maximale de particule des particules de la laque en poudre pour au moins 99 pour cent en masse des particules est ≤ 60 $\mu$m,
      c) la grandeur de particule moyenne des particules de la laque en poudre se situe entre 5 et 12 $\mu$m et
      d) la raideur de pente de la courbe de répartition granulométrique au point d'inflexion est ≥ 150.

3. Procédé selon la revendication 1, caractérisé en ce que la répartition granulométrique est ajustée de sorte que
      a) au moins 90 pour cent en masse des particules de la laque en poudre présentent une grandeur de particule comprise entre 5 et 25 $\mu$m,
      b) la grandeur maximale de particule des particules de la laque en poudre pour au moins 99 pour cent en masse des particules est ≤ 40 $\mu$m,
      c) la grandeur de particule moyenne des particules de la laque en poudre se situe entre 5 et 12 $\mu$m et
      d) la raideur de pente de la courbe de répartition granulométrique au point d'inflexion est ≥ 200.

4. Procédé de préparation d'une laque en poudre pour le recouvrement de soudure de récipients d'emballage à base de résines époxydes et de polyesters contenant des groupements carboxyles, caractérisé en ce que
      1. la laque en poudre contient
      A) au moins un polyester ayant un indice d'acidité de 25 à 120 mg de KOH/g et un indice OH > 10 mg de KOH/g et
      B) au moins une résine époxyde ayant un poids équivalent en époxyde de 400 à 3 000
   et en ce que
      2. la répartition granulométrique de la laque en poudre est ajustée de sorte que

21

EP 0 560 792 B1

a) au moins 90 pour cent en masse des particules de la laque en poudre présentent une grandeur de particule comprise entre 1 et 100 $\mu$m,
b) la grandeur maximale de particule des particules de la laque en poudre pour au moins 99 pour cent en masse des particules est ≤ 150 $\mu$m,
c) la grandeur de particule moyenne des particules de la laque en poudre se situe entre > 20 et 60 $\mu$m et
d) la raideur de pente de la courbe de répartition granulométrique au point d'inflexion est ≥ 50.

5. Procédé selon la revendication 4, caractérisé en ce que la répartition granulométrique est ajustée de sorte que
a) au moins 90 pour cent en masse des particules de la laque en poudre présentent une grandeur de particule comprise entre 5 et 100 $\mu$m,
b) la grandeur maximale de particule des particules de la laque en poudre pour au moins 99 pour cent en masse des particules est ≤ 100 $\mu$m,
c) la grandeur de particule moyenne des particules de la laque en poudre se situe entre 25 et 40 $\mu$m et
d) la raideur de pente de la courbe de répartition granulométrique au point d'inflexion est > 100.

6. Procédé selon l'une quelconque des revendications 1 à 5, caractérisé en ce que la laque en poudre contient
A) au moins un polyester ayant un indice d'acidité de 30 à 90 mg de KOH/g et un indice OH de 15 à 30 mg de KOH/g et
B) au moins une résine époxyde ayant un poids équivalent en époxyde de 600 à 900.

7. Procédé selon l'une quelconque des revendications 1 à 6, caractérisé en ce que la laque en poudre contient en tant que composant B des résines époxydes à base de bisphénol A et/ou des résines Novolak époxydées.

8. Procédé selon l'une quelconque des revendications 1 à 7, caractérisé en ce que la laque en poudre contient en tant que composant A des polyesters à base d'acide téréphtalique et/ou d'acide trimellitique et d'éthylèneglycol et/ou de néopentylglycol.

9. Procédé selon l'une quelconque des revendications 1 à 8, caractérisé en ce que la laque en poudre contient
A) de 19 à 80 % en poids, par rapport au poids total de la laque en poudre, du composant de polyester A et
B) de 19 à 80 % en poids, par rapport au poids total de la laque en poudre, du composant de résine époxyde B.

10. Procédé de revêtement interne de récipients d'emballage, caractérisé en ce que l'on applique une laque en poudre qui a été préparée selon l'une quelconque des revendications 1 à 3 ou 6 à 9, avec une épaisseur de couche < 15 $\mu$m.

11. Procédé de recouvrement de soudure de récipients d'emballage, caractérisé en ce que l'on applique une laque en poudre qui a été préparée selon l'une quelconque des revendications 4 à 9.

12. Utilisation des laques en poudre préparées conformément à un procédé selon l'une quelconque des revendications 1 à 3 ou 6 à 9, pour le revêtement interne de récipients d'emballage.

13. Utilisation des laques en poudre préparées conformément à un procédé selon l'une quelconque des revendications 4 à 9, pour le recouvrement de soudure de récipients d'emballage.